(19) Europäisches Patentamt / European Patent Office / Office européen des brevets

(11) **EP 3 885 313 B1**

(12) **EUROPEAN PATENT SPECIFICATION**

(45) Date of publication and mention
of the grant of the patent:
**19.07.2023 Bulletin 2023/29**

(21) Application number: **19887982.7**

(22) Date of filing: **31.10.2019**

(51) International Patent Classification (IPC):
*C01B 3/38* (2006.01)      *H01M 8/04746* (2016.01)
*H01M 8/0612* (2016.01)    *H01M 8/0432* (2016.01)
*H01M 8/0438* (2016.01)    *H01M 8/0662* (2016.01)

(52) Cooperative Patent Classification (CPC):
**C01B 3/38; H01M 8/04373; H01M 8/04425;**
**H01M 8/04776; H01M 8/0618; H01M 8/0675;**
C01B 2203/0233; C01B 2203/066;
C01B 2203/0811; C01B 2203/0822;
C01B 2203/127; C01B 2203/1619; C01B 2203/169;
C01B 2203/1695; Y02E 60/50;           (Cont.)

(86) International application number:
**PCT/JP2019/042800**

(87) International publication number:
**WO 2020/105388 (28.05.2020 Gazette 2020/22)**

(54) **HYDROGEN GENERATOR AND FUEL CELL SYSTEM USING SAME**

WASSERSTOFFGENERATOR UND BRENNSTOFFZELLENSYSTEM DAMIT

GÉNÉRATEUR D'HYDROGÈNE ET SYSTÈME DE PILE À COMBUSTIBLE L'UTILSANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.11.2018 JP 2018217850**

(43) Date of publication of application:
**29.09.2021 Bulletin 2021/39**

(73) Proprietor: **Panasonic Intellectual Property**
**Management Co., Ltd.**
**Osaka-shi, Osaka 540-6207 (JP)**

(72) Inventors:
• **MIZUTANI, Yuta**
  **Osaka-shi, Osaka 540-6207 (JP)**
• **INOUE, Atsutaka**
  **Osaka-shi, Osaka 540-6207 (JP)**
• **YAMAGUCHI, Shohei**
  **Osaka-shi, Osaka 540-6207 (JP)**

(74) Representative: **Grünecker Patent- und**
**Rechtsanwälte**
**PartG mbB**
**Leopoldstraße 4**
**80802 München (DE)**

(56) References cited:
**EP-A1- 2 767 506          WO-A1-2009/147859**
**JP-A- 2012 169 044       JP-A- 2014 165 129**
**US-A1- 2012 040 256**

EP 3 885 313 B1

(52) Cooperative Patent Classification (CPC): (Cont.)
Y02P 20/10

**Description**

TECHNICAL FIELD

The present disclosure relates to a hydrogen generator and a fuel cell system using the same.

BACKGROUND ART

A fuel cell system is a power generator that uses a raw material gas such as city gas. The fuel cell system is expected as a power generator having higher thermal efficiency and less emission of environmentally hazardous substances than other cogeneration power generation systems.

The raw material gas such as city gas used in the fuel cell system contains a sulfur compound. The sulfur compound particularly poisons a reforming catalyst and deteriorates the reforming catalyst. This requires the sulfur compound to be removed before a raw material is supplied to a reforming unit. Thus, various methods for removing a sulfur compound, such as a room temperature adsorptive desulfurization method and a hydrodesulfurization method, have been proposed.

The above hydrodesulfurization method is a desulfurization method in which a sulfur compound in a raw material is hydrogenated using hydrogen added to the raw material, i.e., the sulfur compound is converted to hydrogen sulfide, and this hydrogen sulfide is removed by a catalyst for adsorption reaction. The hydrodesulfurization method is performed by heating a catalyst used for removing a sulfur compound. The hydrogenation desulfurization method has an adsorption capacity of sulfur compounds that is larger than an adsorption capacity of sulfur compounds by the room temperature adsorptive desulfurization method. Thus, the hydrodesulfurization method is advantageous in long-term operation of a hydrogen generator. However, when the hydrodesulfurization method is used, there is room for improving efficiency of heat supply to a hydro-desulfurizer and simplifying the fuel cell system.

In contrast, while the room temperature adsorptive desulfurization method enables equipment to be simplified, sulfur compounds are reduced, and thus a capacity for accommodating a predetermined amount of desulfurizing agent is required. Thus, as proposed in PTL 1, a flow meter and a desulfurizer are provided in this order from upstream in a raw material gas supply path upstream of a raw material gas supply device. This allows the desulfurizer to function as a buffer tank, so that the desulfurizer has a function of a pressure regulator. This configuration reduces incidental equipment, and is downsized.

The room temperature adsorptive desulfurization method also has a problem of initial adsorption. The initial adsorption means a phenomenon in which when an unused desulfurizer is incorporated, components of a raw material gas are not sufficiently supplied to the reforming unit downstream of the desulfurizer due to adsorption of hydrocarbons having a particularly large molecular weight, such as propane and butane, in the raw material gas, together with sulfur components in the raw material gas in the desulfurizer at start of use of the desulfurizer, i.e., during a period from start of supply of the raw material gas until the raw material gas reaches a predetermined integrated flow rate. When sufficient raw material gas components are not supplied to the reforming unit, a predetermined amount of hydrogen-containing gas is not generated in the reforming unit. Thus, even when the raw material gas is supplied from the outside, the predetermined amount of hydrogen-containing gas is not supplied to the fuel cell. This causes a state in which the fuel cell cannot generate stable power to continue (PTL 2). EP 2 767 506 A1 discloses a system for producing hydrogen from a hydrocarbon comprising two desulfurizer units followed by a reformer unit.

Citation List

Patent Literature

PTL 1: Unexamined Japanese Patent Publication No. 2006-260874
PTL 2: Unexamined Japanese Patent Publication No. 9-320622

SUMMARY OF THE INVENTION

To use a raw material gas in a region where the raw material gas contains a large amount of sulfur components at a high concentration, having various compositions, or of nitrogen and the like at a high concentration, a desulfurizer needs to be increased in capacity. When the desulfurizer is increased in capacity, the following problems occur.

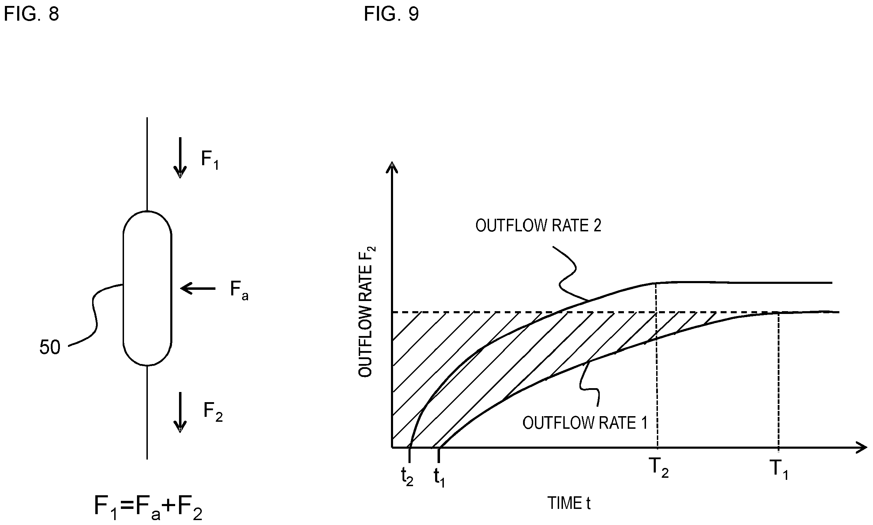

PTL 2 describes adsorption characteristics of a raw material gas on a desulfurizer. FIG. 8 is a diagram illustrating adsorption of a raw material gas on a desulfurizer. FIG. 9 is a diagram showing a relationship between an inflow rate of a raw material gas and an outflow rate of the raw material gas.

As illustrated in FIG. 8, a flow rate of the raw material gas flowing into and out from desulfurizer 50 is defined by (Expression 1) as illustrated in FIG. 8, where $F_1$ is an inflow, $F_2$ is an outflow, and $F_a$ is the amount of adsorption.

$$F_1 = F_a + F_2 \ (\text{Expression } 1)$$

Thus, when the raw material gas flows into desulfurizer 50 through its inlet, the entire inflow of the raw material gas is adsorbed on desulfurizer 50 at an initial stage when the inflow of the raw material gas is started, as shown in the outflow rate $F_2$ in FIG. 9. Thus, the raw material gas flowing out through an outlet of desulfurizer 50 is zero. However, after the adsorption of the raw material gas progresses and elapsed time reaches $t_1$, the raw material gas flows out from the outlet of desulfurizer 50. Inflow $F_1$ is larger than outflow $F_2$ until $T_1$ that is time at which the adsorption to reach an equilibrium state. The adsorption reaches equilibrium after $T_1$, so that inflow $F_1$ is equal to outflow $F_2$.

Here, time from the start of supply of a raw material gas to time when adsorption of the raw material gas reaches an equilibrium state in the desulfurizer is tens of minutes to several hours depending on a type of the raw material gas supplied. In a period until the adsorption reaches the equilibrium state, the raw material gas flowing out of the desulfurizer has a small flow rate. As a result, the amount of hydrogen produced in the reforming unit decreases.

Another problem other than the initial adsorption includes adsorption or desorption due to a temperature change of the desulfurizer. Change in temperature in a body of the desulfurizer or ambient temperature of the desulfurizer causes deviation in flow rates of the raw material gas due to adsorption or desorption of hydrocarbons on the desulfurizer. This reduces the amount of hydrogen produced in the reforming unit. Additionally, decrease in an S/C ratio (steam/carbon ratio) causes carbon precipitation. This may cause deterioration of the reforming catalyst. From the viewpoint of adsorption efficiency, the desulfurizer is vertically long. Increasing capacity of the desulfurizer increases a length of the desulfurizer. This causes the desulfurizer to be likely to be affected, and thus the above-mentioned problems become remarkable.

Increase in capacity of the desulfurizer causes layout design in a system housing and reduction in size of the hydrogen generator and the fuel cell system including the hydrogen generator to be difficult.

The present disclosure solves the above problems of the prior art. An object of the present disclosure is to provide a hydrogen generator that suppresses influence of initial adsorption and deviation in flow rates of a raw material gas in accordance with change in temperature by dividing a desulfurizer into a first desulfurization unit, a flow rate detector, and a second desulfurization unit, being connected in this order from upstream of a raw material gas supply path. The configuration of the present application enables a number of parts to be reduced, and the hydrogen generator and the entire fuel cell system including the hydrogen generator to be downsized.

The present disclosure provides a hydrogen generator including: a raw material gas supply device that supplies a raw material gas containing a sulfur compound; a first desulfurization unit that is composed of at least one desulfurizer connected to upstream of the raw material gas supply device while being filled with a desulfurizing agent for removing the sulfur compound contained in the raw material gas supplied by the raw material gas supply device; a second desulfurization unit that is composed of at least one desulfurizer disposed downstream of the first desulfurization unit while being filled with a desulfurizing agent for removing the sulfur compound contained in the raw material gas; a reforming unit that generates a hydrogen-containing gas by reforming reaction between the raw material gas with the sulfur compound removed and water; and a flow rate detector that is disposed between the first desulfurization unit and the second desulfurization unit to measure a flow rate of the raw material gas flowing out of the first desulfurization unit.

According to the technique of the present disclosure, the first desulfurization unit, the flow rate detector, the second desulfurization unit, and the raw material gas supply device are provided in this order from upstream in a raw material gas supply path upstream of the reforming unit as according with claim 1 or claim 2. This enable not only reducing capacity of the desulfurizer, but also suppressing initial adsorption of hydrocarbons on the desulfurizer and deviation in flow rates of the raw material gas due to effect of adsorption or desorption of hydrocarbons in accordance with change in temperature of a body of the desulfurizer or ambient temperature of the desulfurizer. Additionally, providing the second desulfurization unit with a function of a pressure regulator enables reducing a number of parts and downsizing the entire hydrogen generator.

BRIEF DESCRIPTION OF DRAWINGS

FIG. 1 is a block diagram illustrating a schematic configuration of a hydrogen generator according to a first exemplary embodiment.
FIG. 2 is a diagram showing a relationship between a downstream flow rate of a first desulfurization unit and a target flow rate of a raw material gas.
FIG. 3 is a block diagram illustrating a schematic configuration of a hydrogen generator according to a second exemplary embodiment.
FIG. 4 is a diagram showing a relationship between temperature of a second desulfurization unit after a startup command, and a flow rate of a raw material gas having passed through the second desulfurization unit.
FIG. 5 is a diagram showing a relationship between temperature of the second desulfurization unit after a stop command, and a flow rate of the raw material gas having passed through the second desulfurization unit.
FIG. 6 is a diagram showing a relationship between a downstream flow rate of the first desulfurization unit and a target flow rate of a raw material gas during start-up operation.

FIG. 7 is a diagram showing a relationship between a downstream flow rate of the first desulfurization unit and a target flow rate of a raw material gas during stop operation.

FIG. 8 is a diagram illustrating adsorption of a raw material gas on a desulfurizer.

FIG. 9 is a diagram showing a relationship between an inflow rate of a raw material gas and an outflow rate of the raw material gas.

DESCRIPTION OF EMBODIMENTS

(Underlying knowledge of the present disclosure)

The conventional hydrogen generator described in PTL 2 uses a new desulfurizer that preliminarily adsorbs a raw material gas, i.e., hydrocarbons so that decrease in volume of a raw material gas having passed through the new desulfurizer is suppressed, and ignition stability and combustion stability in a combustor of a reforming unit at startup are ensured, and thus achieving quick startup.

Unfortunately, when a typical city gas as a raw material gas is adsorbed on a new desulfurizer, as illustrated in FIG. 9, the adsorption of the raw material gas of the new desulfurizer is not saturated unless a considerable amount of the city gas is circulated. This causes difficulty in securing combustion stability at startup.

When a flow rate of a raw material gas to be supplied is increased, outflow time of the raw material gas from desulfurizer 50 is shortened from $t_1$ to $t_2$ as illustrated in outflow rate 2 of FIG. 9. Time to reach adsorption equilibrium is also shortened from $T_1$ to $T_2$. This enables predicting that when the desulfurizer is increased in capacity, outflow time of the raw material gas from desulfurizer 50 is extended from $t_2$ to $t_1$ as shown in outflow rate 1 in FIG. 9. Time to reach adsorption equilibrium is also extended from $T_2$ to $T_1$.

In a hydrogen generator or a fuel cell system equipped with a hydrogen generator, temperature of a desulfurizer or ambient temperature thereof decreases when operation of the fuel cell system including the hydrogen generator is stopped. This causes hydrocarbons to be adsorbed on a desulfurizing agent. Then, at the next start-up of the hydrogen generator, the temperature of the desulfurizer or the ambient temperature thereof increases, and the adsorbed hydrocarbons desorb. It is clear that deviation in flow rates of a raw material gas due to adsorption or desorption of hydrocarbons in accordance with change in temperature of a body of a desulfurizer or ambient temperature thereof, as described above, increases as the desulfurizer increases in capacity.

As a result of sharp examination, the inventors of the present application find that when a first desulfurization unit, a flow rate detector, a second desulfurization unit, and a raw material gas supply device are provided in this order from upstream in a raw material gas supply path upstream of a reforming unit, a desulfurizer can be reduced in capacity and influence of initial adsorption of hydrocarbons on the desulfurizer and adsorption or desorption of hydrocarbons in accordance with change in temperature can be suppressed.

(Outline of one aspect of the present disclosure)

A hydrogen generator of the present disclosure includes: a raw material gas supply device that supplies a raw material gas containing a sulfur compound; a first desulfurization unit that is composed of at least one desulfurizer connected to upstream of the raw material gas supply device while being filled with a desulfurizing agent for removing the sulfur compound contained in the raw material gas supplied by the raw material gas supply device; a second desulfurization unit that is composed of at least one desulfurizer disposed downstream of the first desulfurization unit while being filled with a desulfurizing agent for removing the sulfur compound contained in the raw material gas; a reforming unit that generates a hydrogen-containing gas by reforming reaction between the raw material gas with the sulfur compound removed and water; and a flow rate detector that is disposed between the first desulfurization unit and the second desulfurization unit to measure a flow rate of the raw material gas flowing out of the first desulfurization unit.

The hydrogen generator of the present disclosure is configured such that a desulfurization unit is divided into the first desulfurization unit and the second desulfurization unit and each desulfurizer thereof is reduced in capacity. This configuration enables reducing an integrated flow rate of the raw material gas at which adsorption of hydrocarbons in the raw material gas on the desulfurizing agent reaches an equilibrium state, i.e., an integrated flow rate of the raw material gas that needs to pass through the second desulfurization unit. This enables shortening time required for adsorption of hydrocarbons in the raw material gas on the desulfurizing agent to reach an equilibrium state. When the first desulfurization unit and the second desulfurization unit are each composed of a plurality of desulfurizers to reduce capacity of each of the desulfurizers, an integrated flow rate of the raw material gas at which adsorption of hydrocarbons in the raw material gas on the desulfurizers reaches an equilibrium state, i.e., an integrated flow rate of the raw material gas that needs to pass through the second desulfurization unit can be reduced. Additionally, time causing deviation in flow rates of the raw material gas supplied to the reforming unit is shortened. Thus, time required for normal reforming reaction to start in the reforming unit is shortened.

The desulfurizers constituting the first desulfurization unit and the second desulfurization unit are each composed of, for example, a container in a cylindrical shape. When the raw material gas contains a large amount of sulfur components at a high concentration, having various compositions, or of nitrogen and the like at a high concentration, the desulfurizers each need to be increased in capacity. However, when the desulfurizers are each increased in outer diameter, the raw material gas is less likely to diffuse throughout the desulfurizers. This requires the outer diameter of each of the desulfurizers to be kept within a predetermined range. Thus, the desulfurizers are each increased in length to cause difficulty in downsizing the hydrogen generator and the fuel cell system. When a desulfurization unit is divided into the first desulfurization unit and the second desulfurization unit, increase of the desulfurization unit in longitudinal dimension can be suppressed. Thus, the hydrogen generator and the fuel cell system can be downsized.

When the desulfurization unit is divided into the first desulfurization unit and the second desulfurization unit, and the first desulfurization unit and the second desulfurization unit are each reduced in longitudinal dimension, the first desulfurization unit and the second desulfurization unit are each likely to be disposed at a position in a fuel cell system housing, the position being less likely to be subjected to heat from the reforming unit, the combustor, and the fuel cell of the hydrogen generator, for example. As a result, the deviation in flow rates of the raw material gas due to the effect of adsorption or desorption of hydrocarbons in accordance with change in temperature of the body of the desulfurizer or ambient temperature thereof can be reduced. This enables the reforming reaction in the reforming unit to be stabilized.

As the raw material gas supply device, a positive displacement pump for a compressible fluid such as a diaphragm pump or a bellows type pump is used. The positive displacement pump for compressible fluid is prone to pulsation, and the raw material gas is supplied with pressure fluctuation. The hydrogen generator of the present disclosure is configured such that the second desulfurization unit also functions as a pressure regulator. This reduces pulsation caused by the raw material gas supply device composed of a pump or the like. Thus, a detection value of a flow rate of the raw material gas acquired by the flow rate detector is stable, and measurement accuracy can be improved.

The hydrogen generator of the present disclosure further includes a water supply unit that supplies water to the reforming unit, a combustor that heats the reforming unit by burning at least one of a raw material gas with sulfur compounds removed, having passed through the first desulfurization unit and the second desulfurization unit, and a hydrogen-containing gas, a combustion air supply device that supplies combustion air to the combustor, and a controller. The controller controls operation of at least one of the raw material gas supply device and the combustion air supply device based on a flow rate of the raw material gas flowing out of the first desulfurization unit, detected by the flow rate detector.

The hydrogen generator of the present disclosure is provided with the flow rate detector between the first desulfurization unit and a second desulfurizer to measure a flow rate of the raw material gas, thereby controlling operation of at least one of the raw material gas supply device and the combustion air supply device based on the measured value. This enables the reforming reaction performed in the reforming unit to be appropriately controlled. Thus, the flow rate of the raw material gas to be supplied to the reforming unit can be accurately controlled. This enables the reforming unit to generate a hydrogen-containing gas at an appropriate flow rate.

The hydrogen generator of the present disclosure is configured such that the controller adjusts a flow rate of the raw material gas flowing out of the first desulfurization unit, detected by the flow rate detector, to a preset flow rate based on an integrated flow rate of the raw material gas detected by the flow rate detector after the second desulfurization unit is mounted in the hydrogen generator, or the hydrogen generator is started up.

The hydrogen generator of the present disclosure is configured such that the amount of hydrocarbons, such as methane, propane, and butane, to be adsorbed by the second desulfurization unit together with sulfur components in a raw material gas, is preliminarily predicted, and a flow rate of the raw material gas having passed through the first desulfurization unit detected by the flow rate detector is corrected. In particular, a time-dependent change of the amount of raw material gas to be adsorbed on a desulfurizing agent filled in a desulfurizer is preliminarily predicted as in initial adsorption generated on the desulfurizer, so that the first desulfurization unit and the second desulfurization unit can be easily managed. This enables improving controllability of the reforming unit.

The hydrogen generator of the present disclosure further includes a desulfurization temperature detector that detects temperature of the second desulfurization unit or temperature near of the second desulfurization unit. The controller adjusts a flow rate of the raw material gas detected by the flow rate detector to a preset flow rate based on temperature detected by the desulfurization temperature detector, and controls operation of at least one of the raw material gas supply device and the combustion air supply device.

The hydrogen generator of the present disclosure is configured such that the amount of hydrocarbons, such as methane, propane, and butane, to be adsorbed by the second desulfurization unit together with sulfur components in the raw material gas, and a flow rate of the raw material gas detected by the flow rate detector are corrected based on a detection result of the desulfurization temperature detector that detects temperature of the second desulfurization unit or in the vicinity of the second desulfurization unit.

In a hydrogen generator or a fuel cell system equipped with a hydrogen generator, temperature of a desulfurizer or ambient temperature thereof decreases when the operation of the fuel cell system including the hydrogen generator is stopped. This causes the desulfurizer to adsorb hydrocarbons in the desulfurizer. Then, at the next start-up, when the temperature of the desulfurizer or the ambient temperature thereof increases, the hydrocarbons adsorbed on the desulfurizer desorb.

According to the hydrogen generator of the present disclosure, deviation in flow rates of a raw material gas due to adsorption or desorption of hydrocarbons in accordance with change in temperature of the body of the second desulfurization unit or ambient temperature of the second desulfurization unit is preliminarily predicted, and a flow rate of the raw material gas having passed through a first desulfurizer detected by the flow rate detector is corrected. In particular, change in amount of the raw material gas due to desorption of hydrocarbons adsorbed on the second desulfurizer with increase in temperature of the second desulfurization unit, such as during startup of a fuel cell system, can be preliminarily corrected, so that the first desulfurization unit and the second desulfurization unit can be easily managed. This enables improving controllability of the reforming unit.

The hydrogen generator of the present disclosure is configured such that the second desulfurization unit is provided at a position relatively closer to the reforming unit than the first desulfurization unit is.

According to the hydrogen generator of the present disclosure, the second desulfurization unit provided downstream of the flow rate detector has a relatively higher temperature than the first desulfurization unit provided upstream of the flow rate detector during operation of the hydrogen generator. In general, when a desulfurization unit is provided at a position where temperature of a body of the desulfurization unit or ambient temperature thereof increases more than other positions, influence of initial adsorption decreases. Thus, deviation in flow rates of the raw material gas due to adsorption or desorption of hydrocarbons in accordance with change in temperature of the body of the second desulfurization unit or ambient temperature of the second desulfurization unit is smaller than deviation in flow rates of the raw material gas due to adsorption or desorption of hydrocarbons in accordance with change in temperature of the body of the first desulfurization unit or ambient temperature of the first desulfurization unit. This suppresses influence of the deviation in flow rates of the raw material gas on the flow rate detector.

The hydrogen generator of the present disclosure is configured such that the first desulfurization unit and the second desulfurization unit are different from each other in adsorption characteristics for hydrocarbon components contained in the raw material gas.

For example, the first desulfurization unit has adsorption characteristics in which the amount of low-molecular-weight hydrocarbons adsorbed is relatively large among the hydrocarbon components contained in the raw material gas. The second desulfurization unit has adsorption characteristics in which the amount of high-molecular weight hydrocarbons adsorbed is relatively large among the hydrocarbon components contained in the raw material gas. In general, the raw material gas is mainly composed of low-molecular-weight hydrocarbons, so that the deviation in flow rates of the raw material gas due to adsorption or desorption of hydrocarbons using the second desulfurization unit is smaller than the deviation in flow rates of the raw material gas due to adsorption or desorption of hydrocarbons using the first desulfurization unit. This suppresses influence of the deviation in flow rates of the raw material gas on the flow rate detector. For example, the first desulfurization unit and the second desulfurization unit each may use a zeolite-based adsorbent, and the first desulfurization unit and the second desulfurization unit may have the adsorbents different from each other in crystal structure to have respective adsorption performances for hydrocarbon components that are different from each other.

The fuel cell system of the present disclosure includes a hydrogen generator and a fuel cell that generates electricity using a hydrogen-containing gas and an oxidant gas generated by the hydrogen generator.

The fuel cell system of the present disclosure enables suppressing fluctuations in a flow rate of the raw material gas due to adsorption or desorption of the raw material gas on the first desulfurization unit and the second desulfurization unit. This enables managing the flow rate of the raw material gas at an appropriate value even under unsteady operation conditions such as when the fuel cell system is started up and stopped. Thus, the operation of the fuel cell system can be stabilized.

Hereinafter, exemplary embodiments will be described in detail with appropriate reference to the drawings. However, an unnecessarily detailed description may be eliminated. For example, detailed description of already well-known matters and duplicated description of substantially identical configurations may be eliminated. This is to avoid an unnecessarily redundant description below and to facilitate understanding of those skilled in the art.

The attached drawings and the following description are provided for those skilled in the art to fully understand the present disclosure, and are not intended to limit the subject matter described in the scope of claims.

Each drawing is a schematic diagram and is not necessarily strictly illustrated. In each drawing, substantially identical components are denoted by identical reference numerals, and description thereof may be eliminated or simplified.

(First exemplary embodiment)

Hereinafter, a hydrogen generator according to a first exemplary embodiment of the present disclosure and a fuel cell system using the hydrogen generator will be described with reference to the drawings.

<Configuration of hydrogen generator>

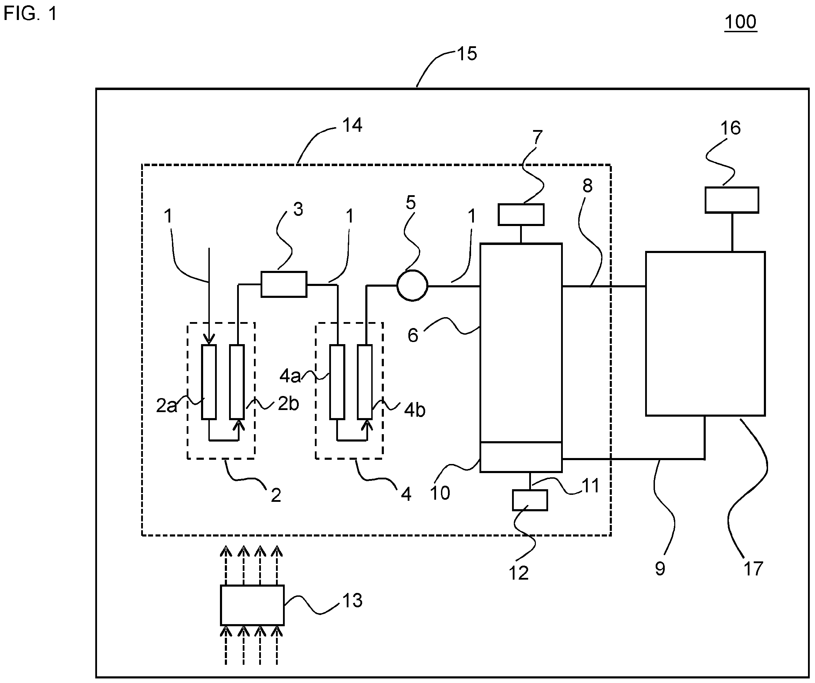

FIG. 1 is a block diagram illustrating a schematic configuration of fuel cell system 100 composed of hydrogen generator 14 according to the first exemplary embodiment and fuel cell 17 using hydrogen generator 14.

As illustrated in FIG. 1, hydrogen generator 14 of the first exemplary embodiment includes raw material gas supply path 1, first desulfurization unit 2, flow rate detector 3, second desulfurization unit 4, raw material gas supply device 5, reforming unit 6, water supply unit 7, hydrogen gas supply path 8, off-gas supply path 9, combustor 10, combustion air supply path 11, combustion air supply device 12, fuel cell 17, and controller 13. Hydrogen generator 14 of the first exemplary embodiment is housed in housing 15.

Controller 13 controls operation of hydrogen generator 14 and fuel cell 17. Controller 13 controls a flow rate of a raw material gas to be supplied to hydrogen generator 14 from raw material gas supply device 5, i.e., the amount of supply of the raw material gas and a flow rate of water to be supplied to hydrogen generator 14 from water supply unit 7, i.e., the amount of supply of the water, for example. Controller 13 is composed of a semiconductor memory, a central processing unit (CPU), or the like, and stores operation information such as an operation action sequence of hydrogen generator 14. Controller 13 calculates an appropriate operating condition suitable for a situation, and instructs an operating condition of at least one of water supply unit 7, raw material gas supply device 5, and combustion air supply device 12, based on a flow rate of the raw material gas detected by flow rate detector 3.

First desulfurization unit 2 is composed of first desulfurizer 2a and second desulfurizer 2b. First desulfurizer 2a and second desulfurizer 2b are connected in series. Similarly, second desulfurization unit 4 is composed of third desulfurizer 4a and fourth desulfurizer 4b. Third desulfurizer 4a and fourth desulfurizer 4b are connected in series. Each of the desulfurization units is filled with Na-X zeolite, which is a zeolite-based desulfurizing agent, as a desulfurizing agent in consideration of removability of sulfur components in the raw material and removal life. The desulfurizing agent is not limited to this, and may be selected based on a type of sulfur compound to be removed.

The desulfurizing agents filled in the respective desulfurization units may be identical or different from each other. For example, first desulfurization unit 2 and second desulfurization unit 4 may be configured to be different from each other in adsorption characteristics for hydrocarbon components contained in a raw material gas. For example, first desulfurization unit 2 and second desulfurization unit 4 each may use a zeolite-based adsorbent, and first desulfurization unit 2 and second desulfurization unit 4 may have the adsorbents different from each other in crystal structure to have respective adsorption performances for hydrocarbon components that are different from each other.

Raw material gas supply path 1 is configured to supply a raw material gas such as city gas to reforming unit 6.

First desulfurization unit 2 is provided in the middle of raw material gas supply path 1. First desulfurization unit 2 removes sulfur compounds in the raw material gas by physical adsorption at room temperature. As a desulfurization material, for example, a zeolite-based adsorbent using ion-exchange Ag for removing odorous components or activated carbon is used.

Flow rate detector 3 is provided in the middle of raw material gas supply path 1. Flow rate detector 3 measures a flow rate of a raw material gas flowing through flow rate detector 3. In the present exemplary embodiment, a thermal flow rate sensor is used for flow rate detector 3.

Second desulfurization unit 4 is provided in the middle of raw material gas supply path 1. As with first desulfurization unit 2, second desulfurization unit 4 removes sulfur compounds in the raw material gas by physical adsorption at room temperature. As a desulfurization material, for example, a zeolite-based adsorbent using ion-exchange Ag for removing odorous components or activated carbon is used.

In the present exemplary embodiment, second desulfurization unit 4 is provided at a position relatively closer to reforming unit 6 than first desulfurization unit 2 is. Thus, during operation of hydrogen generator 14, second desulfurization unit 4 has relatively higher temperature than first desulfurization unit 2. Second desulfurization unit 4 may be provided adjacent to reforming unit 6. Second desulfurization unit 4 may be provided separated from reforming unit 6 to the extent of being not affected by heat generated by reforming unit 6.

Raw material gas supply device 5 is provided in the middle of raw material gas supply path 1. Raw material gas supply device 5 is configured to supply raw material to reforming unit 6 through raw material gas supply path 1. Raw material gas supply device 5 has a function of adjusting the amount of supply of the raw material.

Reforming unit 6 generates a hydrogen-containing gas with reforming reaction by using a raw material gas and steam. The reforming reaction may be any reforming reaction as long as a hydrogen-containing gas is generated from a raw material gas and steam. Specifically, examples of the reforming reaction include steam reforming reaction, partial oxidation reaction, autothermal reaction, and the like.

Reforming unit 6 generates a hydrogen-containing gas that is supplied to hydrogen gas supply path 8. Reforming unit 6 may be provided downstream with at least one of a transformer (not illustrated) that reduces carbon monoxide in a hydrogen-containing gas generated in reforming unit 6 by metamorphic reaction, and a CO remover (not illustrated) that reduces carbon monoxide in the hydrogen-containing gas by at least one of oxidation reaction and methanation reaction.

Water supply unit 7 is connected to reforming unit 6. Water supply unit 7 is a device that supplies reformed water to reforming unit 6 in a state of liquid or gas, i.e., steam. Water supply unit 7 has a function of adjusting the amount of supply of reformed water. Water supply unit 7 is composed of, for example, a plunger pump capable of fixed-quantity discharge, being provided in a water source such as a water supply.

Hydrogen gas supply path 8 is connected to downstream of reforming unit 6. Hydrogen gas supply path 8 is configured to supply a hydrogen-containing gas generated in reforming unit 6 to fuel cell 17.

Off-gas supply path 9 is connected to combustor 10. Off-gas supply path 9 is configured to supply a hydrogen-containing gas that has not been consumed by fuel cell 17 to the combustor.

Combustor 10 uses at least gas discharged from reforming unit 6 as fuel. Combustion air is supplied to combustor 10 by combustion air supply device 12. Combustor 10 heats reforming unit 6.

Combustion air supply path 11 is connected to combustor 10. Combustion air supply path 11 is configured to supply combustion air to combustor 10.

Combustion air supply device 12 is provided at an end of combustion air supply path 11. Combustion air supply device 12 supplies combustion air to combustor 10. Combustion air supply device 12 may have any configuration as long as air can be supplied to combustor 10, and may be composed of a kind of fan, such as a fan or a blower, for example.

Controller 13 causes combustion air supply device 12 to supply combustion air required to burn off-gas supplied to combustor 10. In combustor 10, the off-gas and the combustion air supplied from combustion air supply device 12 are mixed and burned to supply heat required for steam reforming reaction to reforming unit 6. Here, a flow rate of the combustion air is adjusted such that an air ratio representing a flow rate of supply air to a theoretical flow rate of air is 1.7, for example.

Housing 15 is configured to cover the fuel cell system.

Oxidant gas supply device 16 is connected to fuel cell 17. Oxidant gas supply device 16 supplies an oxidant gas required for power generation to fuel cell 17.

Fuel cell 17 is a device that generates electricity by using a hydrogen-containing gas flowing through off-gas supply path 9 and an oxidant gas flowing from oxidant gas supply device 16.

<Operation of hydrogen generator>

Operation and action of hydrogen generator 14 configured as described above will be described below with reference to FIG. 1.

First, a raw material gas is supplied to raw material gas supply path 1. The raw material gas supplied to raw material gas supply path 1 comes into contact with first desulfurization unit 2, i.e., is supplied to first desulfurization unit 2. This causes sulfur components in the raw material gas to be removed. The sulfur components that have not been completely adsorbed by first desulfurization unit 2, i.e., the sulfur components remaining in the raw material gas having passed through first desulfurization unit 2, is adsorbed by second desulfurization unit 4.

However, hydrocarbons such as methane, propane, and butane are adsorbed on first desulfurization unit 2 and second desulfurization unit 4 together with the sulfur components. A desulfurization unit is divided into first desulfurization unit 2 and second desulfurization unit 4, and each of the desulfurization units is reduced in capacity. This configuration enables reducing an integrated flow rate of the raw material gas at which adsorption of hydrocarbons in the raw material gas on the desulfurizing agent filled in first desulfurization unit 2 and second desulfurization unit 4 reaches an equilibrium state, i.e., an integrated flow rate of the raw material gas that needs to pass through the second desulfurization unit. This enables shortening time required for adsorption of hydrocarbons in the raw material gas on the desulfurizing agent to reach an equilibrium state. When first desulfurization unit 2 and second desulfurization unit 4 are composed of corresponding desulfurizers 2a, 2b, 4a, 4b to reduce capacity of each of the desulfurizers, an integrated flow rate of the raw material gas that needs to pass through the second desulfurization unit until adsorption of hydrocarbons in the raw material gas on the desulfurizing agent reaches an equilibrium state. This enables shortening time required for adsorption of hydrocarbons in the raw material gas on the desulfurizing agent to reach an equilibrium state.

First desulfurizer 2a and second desulfurizer 2b, and third desulfurizer 4a and fourth desulfurizer 4b, constituting first desulfurization unit 2 and second desulfurization unit 4, respectively, are each composed of a container in a cylindrical shape, for example. When the raw material gas contains a large amount of sulfur components at a high concentration, having various compositions, or of nitrogen and the like at a high concentration, first desulfurization unit 2 and second desulfurization unit 4 need to be increased in capacity. However, when the desulfurizers are each increased in outer diameter, the raw material gas is less likely to diffuse throughout the desulfurizers. This requires the outer diameter of each of the desulfurizers to be kept within a predetermined range. Thus, first desulfurization unit 2 and second desulfurization unit 4 are each increased in length to cause difficulty in downsizing hydrogen generator 14 and fuel cell system 100. When the desulfurization units are divided into corresponding first desulfurizer 2a, second desulfurizer 2b, third desulfurizer 4a, and fourth desulfurizer 4b, increase in longitudinal dimension of the first desulfurization unit and the second desulfurization unit can be suppressed. Thus, the hydrogen generator and the fuel cell system can be downsized.

When the desulfurization unit is divided into first desulfurization unit 2 and second desulfurization unit 4, and first desulfurization unit 2 and second desulfurization unit 4 are each reduced in longitudinal dimension, first desulfurization unit 2 and second desulfurization unit 4 are each likely to be disposed at a position in housing 15, the position being less likely to be subjected to heat from reforming unit 6, combustor 10, and fuel cell 17 of hydrogen generator 14, for example. As a result, the deviation in flow rates of the raw material gas due to the influence of adsorption or desorption of hydrocarbons in accordance with change in temperature of the body of the desulfurizer or ambient temperature thereof can be reduced. This enables the reforming reaction in reforming unit 6 to be stabilized.

In the present exemplary embodiment, second desulfurization unit 4 provided downstream of flow rate detector 3 has a relatively higher temperature than first desulfurization unit 4 provided upstream of flow rate detector 3 during operation of hydrogen generator 14. In general, when a desulfurization unit is provided at a position where temperature of a body of the desulfurization unit or ambient temperature thereof increases more than other positions, influence of initial adsorption decreases. Thus, deviation in flow rates of the raw material gas due to adsorption or desorption of hydrocarbons in accordance with change in temperature of the body of second desulfurization unit 4 or ambient temperature of second desulfurization unit 4 is smaller than deviation in flow rates of the raw material gas due to adsorption or desorption of hydrocarbons in accordance with change in temperature of the body of first desulfurization unit 2 or ambient temperature of first desulfurization unit 2. This suppresses influence of the deviation in flow rates of the raw material gas on flow rate detector 3.

For example, in the present exemplary embodiment, first desulfurization unit 2 may have adsorption characteristics in which the amount of low-molecular-weight hydrocarbons adsorbed is relatively large among the hydrocarbon components contained in the raw material gas. Second desulfurization unit 4 may have adsorption characteristics in which the amount of high-molecular weight hydrocarbons adsorbed is relatively large among the hydrocarbon components contained in the raw material gas. In general, the raw material gas is mainly composed of low-molecular-weight hydrocarbons, so that the deviation in flow rates of the raw material gas due to adsorption or desorption of hydrocarbons using second desulfurization unit 4 is smaller than the deviation in flow rates of the raw material gas due to adsorption or desorption of hydrocarbons using first desulfurization unit 2. This suppresses influence of the deviation in flow rates of the raw material gas on flow rate detector 3.

Additionally, second desulfurization unit 4 is disposed downstream of flow rate detector 3, so that second desulfurization unit 4 also functions as a pressure regulator. Such a configuration enables reducing pulsation caused by raw material gas supply device 5 even when the buffer tank is eliminated. Thus, a detection value of a flow rate of the raw material gas acquired by flow rate detector 3 is stable, and measurement accuracy can be improved. The system also can be downsized.

The raw material gas having passed through second desulfurization unit 4 initiates reforming reaction with water in reforming unit 6. The amount of water supplied from water supply unit 7 is adjusted to about 2.5 mol of steam per one mol that is a number of carbon atoms in the average molecular formula of the raw material gas, i.e., to a steam carbon ratio (S/C) of about 2.5.

In hydrogen generator 14, steam reforming reaction is performed in reforming unit 6 to generate a hydrogen-containing gas. Although the hydrogen-containing gas is supplied to fuel cell 17, the hydrogen-containing gas being not consumed by fuel cell 17 is supplied to combustor 10. Combustor 10 burns the hydrogen-containing gas being not consumed by fuel cell 17 and oxygen to heat reforming unit 6.

Controller 13 causes combustion air supply device 12 to supply combustion air required to burn off-gas supplied to combustor 10. In combustor 10, the off-gas and the combustion air supplied from combustion air supply device 12 are mixed and burned to supply heat required for steam reforming reaction to reforming unit 6. Here, a flow rate of the combustion air is adjusted such that an air ratio representing a flow rate of supply air to a theoretical flow rate of air is 1.7, for example.

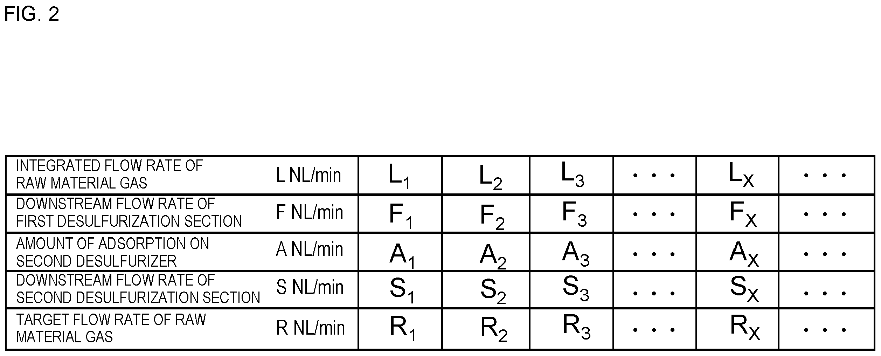

Next, with reference to FIG. 2, controller 13 is described how to adjust a flow rate of the raw material gas supplied to reforming unit 6 and combustor 10 of hydrogen generator 14 based on a detection value of flow rate detector 3.

In the present exemplary embodiment, as illustrated in FIG. 1, first desulfurization unit 2 is disposed upstream of flow rate detector 3. Thus, flow rate detector 3 detects a flow rate of the raw material gas after sulfur components and hydrocarbons in the raw material gas are adsorbed in first desulfurization unit 2. This causes deviation in flow rates of the raw material gas due to the sulfur components and the hydrocarbons adsorbed in second desulfurization unit 4.

A flow rate of the raw material gas downstream of first desulfurization unit 2, being detected by flow rate detector 3, is indicated as $F_X$ (NL/min) (X = 1, 2, 3,...). An integrated flow rate of the raw material gas detected by flow rate detector 3, when second desulfurization unit 4 is newly replaced, is indicated as $L_X$ (NL) (X = 1, 2, 3,...).

Here, the amount of adsorption of sulfur components and hydrocarbons in the raw material gas on second desulfurization unit 4 corresponds to the integrated flow rate of the raw material gas, so that the amount thereof can be measured experimentally before second desulfurization unit 4 is mounted on hydrogen generator 14. The amount of adsorption on second desulfurization unit 4 is indicated as Ax (NL/min) (X = 1, 2, 3,...) by being associated with integrated flow rate Lx (NL) of the raw material gas. At this time, flow rate Sx (NL/min) (X = 1, 2, 3,...) of the raw material gas downstream of second desulfurization unit 4 corresponding to integrated flow rate Lx (NL/min) of the raw material gas is defined by Expression 2.

$$S_X = F_X \cdot A_X \text{ (Expression 2)}$$

A target flow rate to be supplied by controller 13 according to the operation action sequence of hydrogen generator 14 is indicated as Rx (NL/min) (X = 1, 2, 3,...) by being associated with integrated flow rate Lx (NL) of the raw material gas. At this time, controller 13 controls raw material gas supply device 5 in accordance with a detection value of flow rate detector 3 based on a difference between Sx and Rx.

Such a configuration enables first desulfurization unit 2 and second desulfurization unit 4 to be easily managed by preliminarily predicting time-dependent change in the amount of the raw material gas to be adsorbed on the desulfurizing agent filled in second desulfurization unit 4 as in initial adsorption on second desulfurization unit 4. Thus, controllability of reforming unit 6 can be improved.

FIG. 2 shows values such as integrated flow rate Lx (NL) of the raw material gas, flow rate Fx (NL/min) of the raw material gas, and the amount of adsorption $A_X$ (NL/min) on the second desulfurizer, which are stored in a storage unit (not illustrated). Controller 13 reads out each item from the storage unit and instructs operation conditions of water supply unit 7 and at least one of raw material gas supply device 5 and combustion air supply device 12.

Although in the present exemplary embodiment, the storage unit (not illustrated) stores values such as integrated flow rate Lx (NL) of the raw material gas, flow rate Fx (NL/min) of the raw material gas, and the amount of adsorption $A_X$ (NL/min) on the second desulfurizer, the present invention is not limited to this. For example, flow rate Fx (NL/min) of the raw material gas, and the amount of adsorption $A_X$ (NL/min) on the second desulfurizer, may be each used as a function of integrated flow rate Lx (NL) of the raw material gas and stored in the storage unit (not illustrated).

Although in the present exemplary embodiment, first desulfurization unit 2 is composed of first desulfurizer 2a and second desulfurizer 2b, and second desulfurization unit 4 is composed of third desulfurizer 4a and fourth desulfurizer 4b, the present disclosure is not limited to this configuration. The configuration of the desulfurizers may be appropriately changed depending on a type of sulfur component contained in the raw material gas, a flow rate of the raw material gas supplied to hydrogen generator 14, or the like.

Although first desulfurizer 2a and second desulfurizer 2b are connected in series in first desulfurization unit 2, the present disclosure is not limited to this configuration. For example, first desulfurizer 2a and second desulfurizer 2b may be connected in parallel. The same applies to second desulfurization unit 4.

(Second exemplary embodiment)

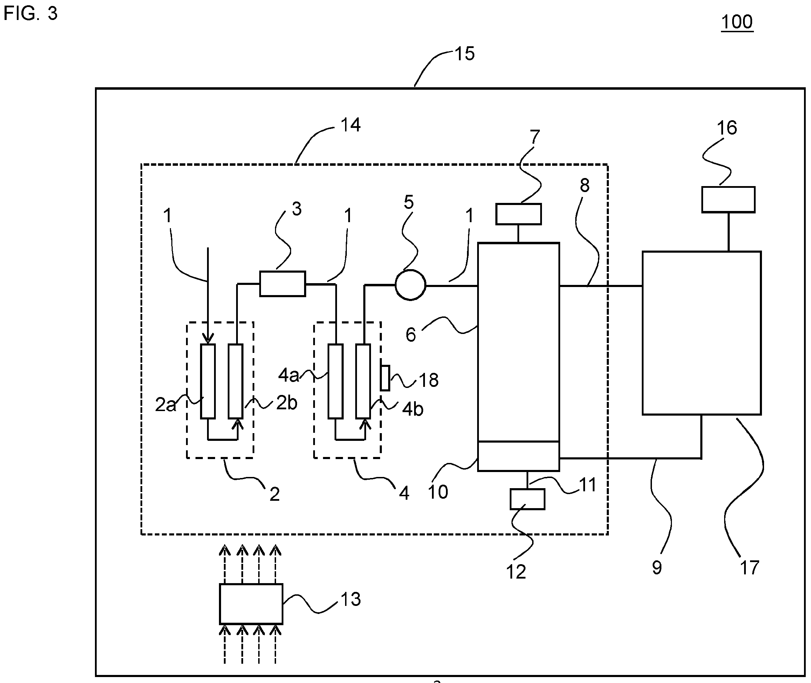

Next, a hydrogen generator according to a second exemplary embodiment of the present disclosure and a fuel cell system using the hydrogen generator will be described with reference to FIG. 3 as in the first exemplary embodiment.

<Configuration of fuel cell system>

Hereinafter, a different point between the second exemplary embodiment and the first exemplary embodiment will be described. Except desulfurization temperature detector 18 for detecting temperature of the body of second desulfurization unit 4 or ambient temperature thereof, other configurations are common to those of the first exemplary embodiment. Thus, components common to those of the first exemplary embodiment are designated by the same reference numerals as those of the first exemplary embodiment, and duplicated description thereof is eliminated.

Desulfurization temperature detector 18 detects temperature of an outer wall of the container of second desulfurization unit 4. Desulfurization temperature detector 18 may be provided at a place that enables measuring temperature that can represent temperature of the desulfurizing agent in second desulfurization unit 4, such as temperature inside second desulfurization unit 4, ambient temperature of second desulfurization unit 4, or temperature of the raw material gas immediately after passing through second desulfurization unit 4, i.e., temperature alternative to the temperature of the desulfurizing agent.

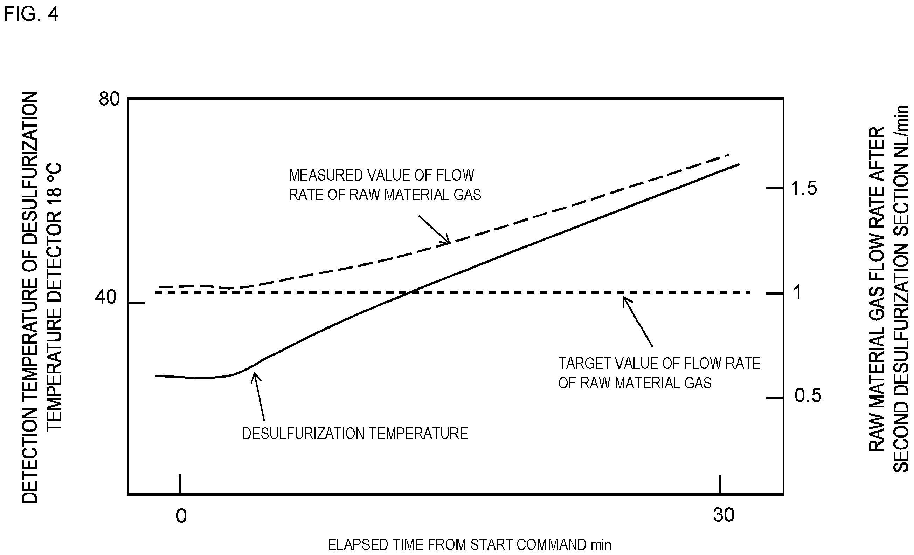

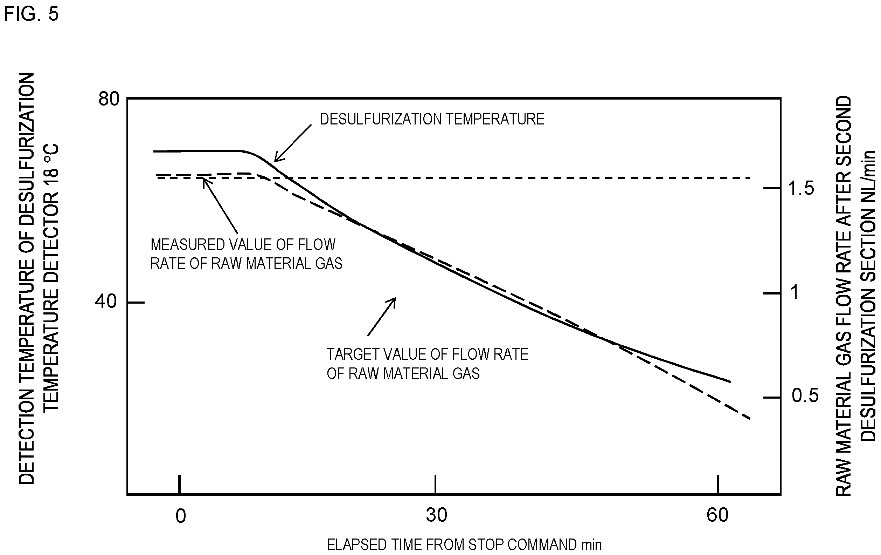

Due to the structure of fuel cell system 100, second desulfurization unit 4 is installed near reforming unit 6 and combustor 10 of hydrogen generator 14. Thus, as shown in FIG. 4, temperature of the body of second desulfurization unit 4 after an instruction to start fuel cell system 100 rises due to heat received from reforming unit 6 and combustor 10. In contrast, the temperature of the body of second desulfurization unit 4 after an instruction to stop fuel cell system 100 decreases as shown in FIG. 5.

As described above, in a hydrogen generator or a fuel cell system equipped with a hydrogen generator, temperature of a desulfurizer or ambient temperature thereof decreases when the operation of the fuel cell system including the hydrogen generator is stopped. This causes the desulfurizer to adsorb hydrocarbons in the desulfurizer. Then, at the next start-up, the temperature of the desulfurizer or the ambient temperature thereof rises, so that the adsorbed hydrocarbons desorb.

The fuel cell system of the second exemplary embodiment is configured such that temperature of the body of second desulfurization unit 4 or ambient temperature of second desulfurization unit 4 can be detected. Thus, a flow rate of a raw material gas having passed through first desulfurization unit 2, the flow rate being detected by flow rate detector 3, can be corrected by predicting deviation in flow rates of the raw material gas due to adsorption or desorption of hydrocarbons that is caused by temperature change of the desulfurizer.

<Operation of hydrogen generator>

Operation and action of hydrogen generator 14 configured as described above will be described below with reference to FIG. 3. Then, a different point between the second exemplary embodiment and the first exemplary embodiment will be described.

As with the first exemplary embodiment, the raw material gas having passed through second desulfurization unit 4 initiates reforming reaction with water in reforming unit 6. The amount of water supplied from water supply unit 7 is adjusted to about 2.5 mol of steam per one mol that is a number of carbon atoms in the average molecular formula of the raw material gas, i.e., to a steam carbon ratio (S/C) of about 2.5.

In hydrogen generator 14, steam reforming reaction is performed in reforming unit 6 to generate a hydrogen-containing gas. Although the hydrogen-containing gas is supplied to fuel cell 17, the hydrogen-containing gas being not consumed by fuel cell 17 is supplied to combustor 10. Combustor 10 burns the hydrogen-containing gas being not consumed by fuel cell 17 and oxygen to heat reforming unit 6.

Controller 13 causes combustion air supply device 12 to supply combustion air required to burn off-gas supplied to combustor 10. In combustor 10, the off-gas and the combustion air supplied from combustion air supply device 12 are mixed and burned to supply heat required for steam reforming reaction to reforming unit 6. Here, a flow rate of the combustion air is adjusted such that an air ratio representing a flow rate of supply air to a theoretical flow rate of air is 1.7, for example.

Next, controller 13 is described how to adjust a flow rate of the raw material gas supplied to reforming unit 6 and combustor 10 of hydrogen generator 14 based on a detection value of flow rate detector 3.

(1) The following is a case where a startup command is issued to fuel cell system 100 by controller 13.

When the startup command is issued to the fuel cell system by controller 13, temperature of the body of second desulfurization unit 4 rises due to heat received from reforming unit 6 and combustor 10 of hydrogen generator 14. FIG. 4 shows an example of change in temperature detected by desulfurization temperature detector 18 for 30 minutes after the startup command, and the temperature of the second desulfurization unit rises from 28°C to near 60°C in about 30 minutes.

As the temperature of second desulfurization unit 4 rises, hydrocarbons in the raw material gas adsorbed on second desulfurization unit 4 desorb. When a flow rate of the raw material gas having passed through second desulfurization unit 4 supplied by raw material gas supply device 5 was set to 1 (NL/min), change in the flow rate of the raw material gas with increase in temperature of the body of second desulfurization unit 4 was measured. As a result of the measurement, the flow rate of the raw material gas having passed through second desulfurization unit 4 increased to 1.6 (NL/min) in 30 minutes after the startup command.

However, flow rate detector 3 is installed between first desulfurization unit 2 and second desulfurization unit 4, so that the deviation in flow rates described above cannot be detected. Thus, in the second exemplary embodiment, the flow rate of the raw material gas having passed through second desulfurization unit 4 is corrected based on the detection result of desulfurization temperature detector 18.

In the second exemplary embodiment, after controller 13 issues a startup command to fuel cell system 100, temperature change is detected based on the detection result received from desulfurization temperature detector 18 at predetermined intervals $\delta t$ (sec). The temperature change of second desulfurization unit 4 causes a phenomenon in which hydrocarbons of the raw material gas desorb from second desulfurization unit 4. This temperature change is here defined as a variation of desorption temperature $\delta T_1$ (°C).

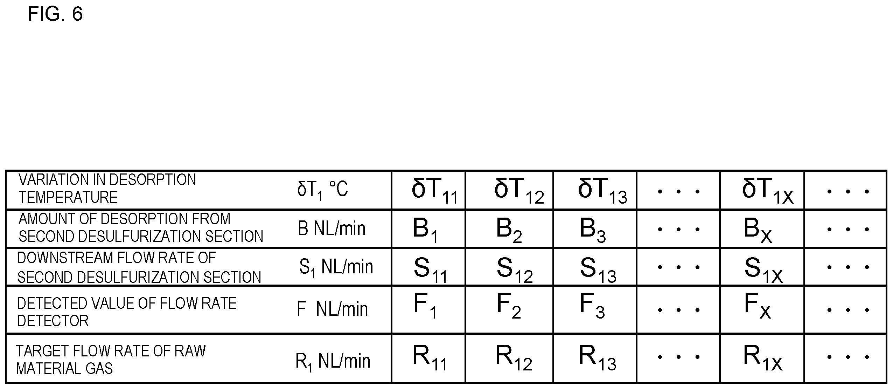

Controller 13 acquires the variation of desorption temperature $\delta T_{1X}$ (°C) at predetermined intervals $\delta t$ (sec), and corrects the flow rate downstream of second desulfurization unit 4 based on the amount of desorption B (NL/min) from the second desulfurization unit, shown in FIG. 6. Here, the amount of desorption B (NL/min) of hydrocarbons in the raw material gas, desorbing from second desulfurization unit 4, and corresponding to the variation of desorption temperature $\delta T_1$ (°C), can be measured experimentally before second desulfurization unit 4 is mounted on hydrogen generator 14.

That is, the variation of desorption temperature is $\delta T_{1X}$ (°C) when the X-th measurement (X = 1, 2, 3,...) is performed by desulfurization temperature detector 18 after the startup command is issued, the amount of desorption from second desulfurization unit 4 is Bx (NL/min). Thus, when flow rate detector 3 detects a value Fx (NL/min), a downstream flow rate $S_{1X}$(NL/min) of the second desulfurization unit is defined by Expression 3.

$$S_{1X} = F_X + B_X \text{ (Expression 3)}$$

When a target flow rate to be supplied according to the operation action sequence of hydrogen generator 14 is indicated as $R_{1X}$ (NL/min), controller 13 controls raw material gas supply device 5 with reference to a difference between $S_{1X}$ and $R_{1X}$, and based on a detection value of flow rate detector 3.

Such a configuration enables managing the flow rate of the raw material gas downstream of second desulfurization unit 4 at an appropriate value even under unsteady operation conditions such as start-up operation. Thus, the operation of the fuel cell system can be stabilized.

FIG. 6 shows values such as the variation of desorption temperature $\delta T_{1X}$ (°C), and the amount of desorption of hydrocarbons B (NL/min) in the raw gas material, desorbing from second desulfurization unit 4, and the values are stored in a storage unit (not illustrated). Controller 13 reads out each item from the storage unit and instructs operation conditions of water supply unit 7 and at least one of raw material gas supply device 5 and combustion air supply device 12.

Although in present exemplary embodiment, the values such as the variation of desorption temperature $\delta T_{1X}$ (°C), and the amount of desorption of hydrocarbons B (NL/min) in the raw material gas, desorbing from second desulfurization unit 4, are stored in the storage unit (not shown), the present disclosure is not limited to this. For example, the amount of desorption of hydrocarbons B (NL/min) in the raw material gas may be used as a function of the variation of desorption temperature $\delta T_{1X}$ (°C) and stored in the storage unit (not illustrated).

(2) The following is a case where controller 13 issues a stop command to fuel cell system 100.

When the stop command is issued to the fuel cell system by controller 13, temperature of the body of second desulfurization unit 4 decreases as temperatures of reforming unit 6 and combustor 10 of hydrogen generator 14 decrease. FIG. 5 shows an example of change in temperature detected by desulfurization temperature detector 18 in one hour after the stop command, and the temperature of the second desulfurization unit decreases from 70°C to near 30°C in about one hour.

As the temperature of second desulfurization unit 4 decreases, hydrocarbons in the raw material gas adsorb on second desulfurization unit 4. When a flow rate of the raw material gas having passed through second desulfurization unit 4 supplied by raw material gas supply device 5 was set to 1.6 (NL/min), change in the flow rate of the raw material gas with decrease in temperature of the body of second desulfurization unit 4 was measured. As a result of the measurement, the flow rate of the raw material gas having passed through second desulfurization unit 4 decreased to 0.4 (NL/min) in one hour after the stop command.

However, flow rate detector 3 is installed between first desulfurization unit 2 and second desulfurization unit 4, so that the deviation in flow rates described above cannot be detected. Thus, in the second exemplary embodiment, the flow rate of the raw material gas having passed through second desulfurization unit 4 is corrected based on the detection result of desulfurization temperature detector 18.

In the second exemplary embodiment, after controller 13 issues a stop command to fuel cell system 100, temperature change is detected based on the detection result received from desulfurization temperature detector 18 at predetermined intervals $\delta t$ (sec). The tem-

perature change of second desulfurization unit 4 causes a phenomenon in which hydrocarbons of the raw material gas adsorb from second desulfurization unit 4. This temperature change is here defined as a variation of adsorption temperature $\delta T_2$ (°C).

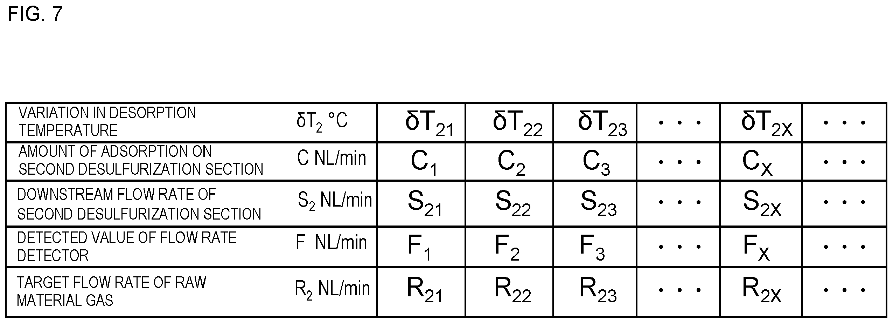

Controller 13 acquires the variation of adsorption temperature $\delta T_{2X}$ (°C) at predetermined intervals $\delta t$ (sec), and corrects the flow rate downstream of second desulfurization unit 4 based on the amount of adsorption C (NL/min) on the second desulfurization unit, shown in FIG. 7. Here, the amount of adsorption C (NL/min) of hydrocarbons in the raw material gas, adsorbing on second desulfurization unit 4, and corresponding to the variation of adsorption temperature $\delta T_2$ (°C), can be measured experimentally before second desulfurization unit 4 is mounted on hydrogen generator 14.

That is, the variation of desorption temperature is $\delta T_{2X}$ (°C) when the X-th measurement (X = 1, 2, 3,...) is performed by desulfurization temperature detector 18 after the stop command is issued, the amount of adsorption on second desulfurization unit 4 is Cx (NL/min). Thus, when flow rate detector 3 detects a value $F_X$ (NL/min), a downstream flow rate $S_{2X}$ (NL/min) of the second desulfurization unit is defined by Expression 4.

$$S_{2X} = F_X \cdot C_X \text{ (Expression 4)}$$

When a target flow rate to be supplied according to the operation action sequence of hydrogen generator 14 is indicated as $R_{2X}$ (NL/min), controller 13 controls raw material gas supply device 5 with reference to a difference between $S_{2X}$ and $R_{2X}$, and based on a detection value of flow rate detector 3.

Such a configuration enables managing the flow rate of the raw material gas downstream of second desulfurization unit 4 at an appropriate value even under unsteady operation conditions such as stop operation. Thus, the operation of the fuel cell system can be stabilized.

FIG. 7 shows values such as the variation of adsorption temperature $\delta T_{2X}$ (°C), and the amount of adsorption of hydrocarbons C (NL/min) in the raw material gas, adsorbing on second desulfurization unit 4, and the values are stored in the storage unit (not illustrated). Controller 13 reads out each item from the storage unit and instructs operation conditions of water supply unit 7 and at least one of raw material gas supply device 5 and combustion air supply device 12.

Although in present exemplary embodiment, the values such as the variation of adsorption temperature $\delta T_{2X}$ (°C), and the amount of adsorption of hydrocarbons C (NL/min) in the raw material gas, adsorbing on second desulfurization unit 4, are stored in the storage unit (not shown), the present disclosure is not limited to this. For example, the amount of adsorption of hydrocarbons C (NL/min) in the raw material gas, adsorbing on second desulfurization unit 4, may be used as a function of the variation of adsorption temperature $\delta T_{2X}$ (°C) and stored in the storage unit (not illustrated).

Although in the second exemplary embodiment, first desulfurization unit 2 is composed of first desulfurizer 2a and second desulfurizer 2b, and second desulfurization unit 4 is composed of third desulfurizer 4a and fourth desulfurizer 4b, the present disclosure is not limited to this configuration. The configuration of the desulfurizers may be appropriately changed depending on a type of sulfur component contained in the raw material gas or a flow rate of the raw material gas supplied to hydrogen generator 14.

Although first desulfurizer 2a and second desulfurizer 2b are connected in series in first desulfurization unit 2, the present disclosure is not limited to this configuration. For example, first desulfurizer 2a and second desulfurizer 2b may be connected in parallel. The same applies to second desulfurization unit 4.

<Operation of fuel cell system>

Next, operation and action of fuel cell 17 according to the second exemplary embodiment of the present disclosure will be described below with reference to FIG. 3.

When the fuel cell system is started up from a stop state, first, hydrogen generator 14 is started up. In response to a command from controller 13, the raw material gas having passed through hydrogen generator 14 is supplied to combustor 10, and ignited in combustor 10 to start heating.

At this time, water supply unit 7 is operated to supply water to reforming unit 6 of hydrogen generator 14, and then reforming reaction between the water and the raw material gas is started. Reforming unit 6 allows steam reforming reaction to proceed, and a generated hydrogen-containing gas is supplied to fuel cell 17 through hydrogen gas supply path 8. The concentration of carbon monoxide in the hydrogen-containing gas is reduced to, for example, the volume concentration, i.e., about 20 ppm or less on a dry gas basis when the hydrogen-containing gas is supplied to a solid polymer fuel cell. Controller 13 controls operation of raw material gas supply device 5 such that the amount of hydrogen-containing gas required for power generation of fuel cell 17 is supplied through first desulfurization unit 2 and second desulfurization unit 4. At this time, controller 13 also controls operation of oxidant gas supply device 16 to supply an oxidant gas, i.e., air, required for power generation of fuel cell 17.

In addition to the effect of the first exemplary embodiment, the present exemplary embodiment enables fluctuations in a flow rate of the raw material gas to be suppressed by detecting temperature of the body of second desulfurization unit 4 or ambient temperature thereof, predicting the amount of adsorption or desorption of the raw material gas on second desulfurization unit 4, and correcting the flow rate of the raw material gas detected by flow rate detector 3. This enables managing the flow rate of the raw material gas at an appropriate value even under unsteady operation conditions such as at the time of startup or stop. As a result, the operation of the fuel cell system can be stabilized.

From the above description, many modifications and other exemplary embodiments of the present disclosure are apparent to those skilled in the art. Thus, the above description should be interpreted as only an example and is provided for the purpose of teaching those skilled in the art the best form of carrying out the present disclosure.

INDUSTRIAL APPLICABILITY

The hydrogen generator of the present disclosure can supply an appropriate raw material gas to the reforming unit even when a fuel gas requiring removal of sulfur components by a desulfurizer is used. When the raw material gas having passed through the desulfurizer is burned from the reforming unit to heat the hydrogen generator, stable combustion can be performed. This enables smooth startup, and thus being useful for fuel cell systems.

REFERENCE MARKS IN THE DRAWINGS

| | |
|---|---|
| 1 | raw material gas supply path |
| 2 | first desulfurization unit |
| 2a | first desulfurizer |
| 2b | second desulfurizer |
| 3 | flow rate detector |
| 4 | second desulfurization unit |
| 4a | third desulfurizer |
| 4b | fourth desulfurizer |
| 5 | raw material gas supply device |
| 6 | reforming unit |
| 7 | water supply unit |
| 8 | hydrogen gas supply path |
| 9 | off-gas supply path |
| 10 | combustor |
| 11 | combustion air supply path |
| 12 | combustion air supply device |
| 13 | controller |
| 14 | hydrogen generator |
| 15 | housing |
| 16 | oxidant gas supply device |
| 17 | fuel cell |
| 18 | desulfurization temperature detector |
| 50 | desulfurizer |
| 100 | fuel cell system |

## Claims

1. A hydrogen generator (14) comprising:

    a raw material gas supply device (5) that is configured to supply a raw material gas containing a sulfur compound;
    a first desulfurization unit (2) that includes at least one desulfurizer connected to upstream of the raw material gas supply device (5), the at least one desulfurizer in the first desulfurization unit (2) being filled with a desulfurizing agent for removing at least part of the sulfur compound contained in the raw material gas from the raw material gas supply device (5);
    a second desulfurization unit (4) that is composed of at least one desulfurizer disposed downstream of the first desulfurization unit (2), at least one desulfurizer in the second desulfurization unit (4) being filled with a desulfurizing agent for removing at least part of the sulfur compound from the raw material gas;
    a reforming unit (6) that is configured to generate a hydrogen-containing gas by reforming reaction between a resulting raw material gas and water, the resulting raw material gas being the raw material gas from which all the sulfur compound is removed by the first desulfurization unit (2) and the second desulfurization unit (4);
    a flow rate detector (3) that is disposed between the first desulfurization unit (2) and the second desulfurization unit (4) and configured to measure a flow rate of the raw material gas flowing out of the first desulfurization unit (2);
    a water supply unit (7) that is configured to supply the water to the reforming unit (6);
    a combustor (10) that is configured to heat the reforming unit (6) by burning at least one of the resulting raw material gas and the hydrogen-containing gas;
    a combustion air supply device (12) that is configured to supply combustion air to the combustor (10);
    a controller (13) configured to control operation of at least one of the raw material gas supply device (5) and the combustion air supply device (12) based on the flow rate measured by the flow rate detector (3); and
    a desulfurization temperature detector (18) that is configured to detect a temperature of the second desulfurization unit (4) or an ambient temperature of the second desulfurization unit (4),
    wherein the controller (13) is configured to adjust the flow rate measured by the flow rate detector (3) to a preset flow rate based on the temperature detected by the desulfurization temperature detector (18), thereby controlling operation of at least one of the raw material gas supply device (5) and the combustion air supply device (12).

2. A hydrogen generator (14) comprising:

    a raw material gas supply device (5) that is configured to supply a raw material gas containing a sulfur compound;
    a first desulfurization unit (2) that includes at least one desulfurizer connected to upstream of the raw material gas supply device (5), the at least one desulfurizer in the first desulfurization unit (2) being filled with a desulfurizing agent for removing at least part of the sulfur compound contained in the raw material gas from the raw material gas supply device (5);
    a second desulfurization unit (4) that is composed of at least one desulfurizer disposed downstream of the first desulfurization unit (2), at least one desulfurizer in the second desulfurization unit (4) being filled with a desulfurizing agent for removing at least part of the sulfur compound from the raw material gas;
    a reforming unit (6) that is configured to generate a hydrogen-containing gas by reforming reaction between a resulting raw material gas and water, the resulting raw material gas being the raw material gas from which all the sulfur compound is removed by the first desulfurization unit (2) and the second desulfurization unit (4);
    a flow rate detector (3) that is disposed between the first desulfurization unit (2) and the second desulfurization unit (4) and configured to measure a flow rate of the raw material gas flowing out of the first desulfurization unit (2);
    a water supply unit (7) that is configured to supply the water to the reforming unit (6);
    a combustor (10) that is configured to heat the reforming unit (6) by burning at least one of the resulting raw material gas and the hydrogen-containing gas;
    a combustion air supply device (12) that is configured to supply combustion air to the combustor (10); and
    a controller (13) configured to control operation of at least one of the raw material gas supply device (5) and the combustion air supply device (12) based on the flow rate measured by the flow rate detector (3),
    wherein the controller (13) is configured to adjust the flow rate measured by the flow rate detector (3) to a preset flow rate based on a sum of the flow rates measured by the flow rate detector (3), after the second desulfurization unit (4) is mounted in the hydrogen generator or after the hydrogen generator is started up.

3. The hydrogen generator (14) according to claim 1 or 2, wherein the second desulfurization unit (4) is provided at a position relatively closer to the reforming unit (6) than the first desulfurization (2) unit is.

4. The hydrogen generator (14) according to claim 1 or 2, wherein the first desulfurization unit (2) and the second desulfurization unit (4) are different from each other in adsorption characteristics for hydrocarbon components contained in the raw material gas.

5. A fuel cell system (100) comprising:

the hydrogen generator (14) according to any one of claims 1 to 4; and
a fuel cell (17) that is configured to generate electricity using an oxidant gas and the hydrogen-containing gas generated by the hydrogen generator (14).

**Patentansprüche**

1. Wasserstoff-Erzeugungsvorrichtung (14), die umfasst:

eine Einrichtung (5) für Zufuhr von Rohstoff-Gas, die so ausgeführt ist, dass sie ein Rohstoff-Gas zuführt, das eine Schwefelverbindung enthält;
eine erste Entschwefelungs-Einheit (2), die wenigstens eine Entschwefelungseinrichtung einschließt, die stromauf von der Einrichtung (5) für Zufuhr von Rohstoff-Gas angeschlossen ist, wobei die wenigstens eine Entschwefelungseinrichtung in der ersten Entschwefelungs-Einheit (2) mit einem Entschwefelungsmittel zum Entfernen wenigstens eines Teils der Schwefelverbindung gefüllt ist, die in dem Rohstoff-Gas von der Einrichtung (5) für Zufuhr von Rohstoff-Gas enthalten ist;
eine zweite Entschwefelungs-Einheit (4), die aus wenigstens einer Entschwefelungseinrichtung besteht, die stromab von der ersten Entschwefelungs-Einheit (2) angeordnet ist, wobei wenigstens eine Entschwefelungseinrichtung in der zweiten Entschwefelungs-Einheit (4) mit einem Entschwefelungsmittel zum Entfernen wenigstens eines Teils der Schwefelverbindung aus dem Rohstoff-Gas gefüllt ist;
eine Reformier-Einheit (6), die so ausgeführt ist, dass sie ein wasserstoffhaltiges Gas mittels Reformier-Reaktion zwischen einem resultierenden Rohstoff-Gas und Wasser erzeugt, wobei das resultierende Rohstoff-Gas das Rohstoff-Gas ist, aus dem die gesamte Schwefelverbindung durch die erste Entschwefelungs-Einheit (2) und die zweite Entschwefelungs-Einheit (4) entfernt worden ist;

einen Durchfluss-Detektor (3), der zwischen der ersten Entschwefelungs-Einheit (2) und der zweiten Entschwefelungs-Einheit (4) angeordnet und so ausgeführt ist, dass er einen Durchfluss des aus der ersten Entschwefelungs-Einheit (2) ausströmenden Rohstoff-Gases misst;
eine Wasserzufuhr-Einheit (7), die so ausgeführt ist; dass sie der Reformier-Einheit (6) Wasser zuführt;
einen Brenner (10), der so ausgeführt ist, dass er die Reformier-Einheit (6) durch Verbrennen des resultierenden Rohstoff-Gases oder/und des wasserstoffhaltigen Gases erhitzt;
eine Verbrennungsluft-Zuführeinrichtung (12), die so ausgeführt ist, dass sie dem Brenner (10) Verbrennungsluft zuführt;
eine Steuerungseinrichtung (13), die so ausgeführt ist, dass sie Betrieb der Einrichtung (5) für Zufuhr von Rohstoff-Gas und/oder der Verbrennungsluft-Zuführeinrichtung (12) auf Basis des von dem Durchfluss-Detektor (3) gemessenen Durchflusses steuert; und
einen Entschwefelungstemperatur-Detektor (18), der so ausgeführt ist, dass er eine Temperatur der zweiten Entschwefelungs-Einheit (4) oder eine Umgebungstemperatur der zweiten Entschwefelungs-Einheit (4) erfasst,
wobei die Steuerungseinrichtung (13) so ausgeführt ist, dass sie den von dem Durchfluss-Detektor (3) gemessenen Durchfluss auf Basis der von dem Entschwefelungstemperatur-Detektor (18) erfassten Temperatur auf einen voreingestellten Durchfluss einstellt und so Betrieb der Einrichtung (5) für Zufuhr von Rohstoff-Gas sowie der Verbrennungsluft-Zuführeinrichtung (12) steuert.

2. Wasserstoff-Erzeugungsvorrichtung (14), die umfasst:

eine Einrichtung (5) für Zufuhr von Rohstoff-Gas, die so ausgeführt ist, dass sie ein Rohstoff-Gas zuführt, das eine Schwefelverbindung enthält;
eine erste Entschwefelungs-Einheit (2), die wenigstens eine Entschwefelungseinrichtung einschließt, die stromauf von der Einrichtung (5) für Zufuhr von Rohstoff-Gas angeschlossen ist, wobei die wenigstens eine Entschwefelungseinrichtung in der ersten Entschwefelungs-Einheit (2) mit einem Entschwefelungsmittel zum Entfernen wenigstens eines Teils der Schwefelverbindung gefüllt ist, die in dem Rohstoff-Gas von der Einrichtung (5) für Zufuhr von Rohstoff-Gas enthalten ist;
eine zweite Entschwefelungs-Einheit (4), die aus wenigstens einer Entschwefelungseinrichtung besteht, die stromab von der ersten Entschwefelungs-Einheit (2) angeordnet ist, wobei wenigstens eine Entschwefelungseinrichtung in der zweiten Entschwefelungs-Einheit (4) mit einem Entschwefelungsmittel zum Entfernen wenigstens eines Teils der Schwefelverbindung aus dem Rohstoff-Gas gefüllt ist;

eine Reformier-Einheit (6), die so ausgeführt ist, dass sie ein wasserstoffhaltiges Gas mittels Reformier-Reaktion zwischen einem resultierenden Rohstoff-Gas und Wasser erzeugt, wobei das resultierende Rohstoff-Gas das Rohstoff-Gas ist, aus dem die gesamte Schwefelverbindung durch die erste Entschwefelungs-Einheit (2) und die zweite Entschwefelungs-Einheit (4) entfernt worden ist;

einen Durchfluss-Detektor (3), der zwischen der ersten Entschwefelungs-Einheit (2) und der zweiten Entschwefelungs-Einheit (4) angeordnet und so ausgeführt ist, dass er einen Durchfluss des aus der ersten Entschwefelungs-Einheit (2) ausströmenden Rohstoff-Gases misst;

eine Wasserzufuhr-Einheit (7), die so ausgeführt ist; dass sie der Reformier-Einheit (6) Wasser zuführt;

einen Brenner (10), der so ausgeführt ist, dass er die Reformier-Einheit (6) durch Verbrennen des resultierenden Rohstoff-Gases oder/und des wasserstoffhaltigen Gases erhitzt;

eine Verbrennungsluft-Zuführeinrichtung (12), die so ausgeführt ist, dass sie dem Brenner (10) Verbrennungsluft zuführt; sowie

eine Steuerungseinrichtung (13), die so ausgeführt ist, dass sie Betrieb der Einrichtung (5) für Zufuhr von Rohstoff-Gas und/oder der Verbrennungsluft-Zuführeinrichtung (12) auf Basis des von dem Durchfluss-Detektor (3) gemessenen Durchflusses steuert;

wobei die Steuerungseinrichtung (13) so ausgeführt ist, dass sie den von dem Durchfluss-Detektor (3) gemessenen Durchfluss auf einen voreingestellten Durchfluss einstellt, der auf einer Summe der von dem Durchfluss-Detektor (3) gemessenen Durchflüsse basiert, nachdem die zweite Entschwefelungs-Einheit (4) in der Wasserstoff-Erzeugungsvorrichtung installiert wurde oder nachdem die Wasserstoff-Erzeugungsvorrichtung in Betrieb genommen wurde.

3. Wasserstoff-Erzeugungsvorrichtung (14) nach Anspruch 1 oder 2, wobei die zweite Entschwefelungs-Einheit (4) an einer Position vorhanden ist, die vergleichsweise näher an der Reformier-Einheit (6) liegt als die erste Entschwefelungs-Einheit (2).

4. Wasserstoff-Erzeugungsvorrichtung (14) nach Anspruch 1 oder 2, wobei sich die erste Entschwefelungs-Einheit (2) und die zweite Entschwefelungs-Einheit (4) in ihren Adsorptions-Eigenschaften für in dem Rohstoff-Gas enthaltene Kohlenwasserstoff-Komponenten voneinander unterscheiden.

5. Brennstoffzellen-System (100), das umfasst:

die Wasserstoff-Erzeugungsvorrichtung nach einem der Ansprüche 1 bis 4; sowie eine Brennstoffzelle (17), die so ausgeführt ist, dass sie Elektrizität unter Verwendung eines Oxidant-Gases und des von der Wasserstoff-Erzeugungsvorrichtung (14) erzeugten wasserstoffhaltigen Gases erzeugt.

**Revendications**

1. Générateur d'hydrogène (14) comprenant :

un dispositif de fourniture de gaz matière première (5) qui est conçu pour fournir un gaz matière première contenant un composé soufré ; une première unité de désulfuration (2) qui comporte au moins un désulfureur relié à l'amont du dispositif de fourniture de gaz matière première (5), l'au moins un désulfureur dans la première unité de désulfuration (2) étant rempli d'un agent désulfurant chargé d'éliminer au moins une partie du composé soufré présent dans le gaz matière première provenant du dispositif de fourniture de gaz matière première (5) ;

une seconde unité de désulfuration (2) qui est composée d'au moins un désulfureur relié à l'aval de la première unité de désulfuration (2), au moins un désulfureur dans la seconde unité de désulfuration (4) étant rempli d'un agent désulfurant chargé d'éliminer au moins une partie du composé soufré du gaz matière première ;

une unité de reformage (6) qui est conçue pour générer un gaz contenant de l'hydrogène par une réaction de reformage entre un gaz matière première résultant et de l'eau, le gaz matière première résultant étant le gaz matière première dont tout le composé soufré a été éliminé par la première unité de désulfuration (2) et la seconde unité de désulfuration (4) ;

un détecteur de débit (3) qui est disposé entre la première unité de désulfuration (2) et la seconde unité de désulfuration (4) et conçu pour mesurer un débit du gaz matière première s'écoulant hors de la première unité de désulfuration (2) ;

une unité de fourniture d'eau (7) qui est configurée pour fournir l'eau à l'unité de reformage (6) ;

un brûleur (10) qui est conçu pour chauffer l'unité de reformage (6) en brûlant au moins l'un du gaz matière première résultant et du gaz contenant de l'hydrogène ;

un dispositif de fourniture d'air de combustion (12) qui est conçu pour fournir de l'air de combustion au brûleur (10) ;

un module de commande (13) configuré pour commander le fonctionnement de l'un au moins du dispositif de fourniture de gaz matière première (5) et du dispositif de fourniture d'air de combustion (12) sur la base du débit mesuré par le détecteur de débit (3) ; et

un détecteur de température de désulfuration (18) qui est configuré pour détecter une température de la seconde unité de désulfuration (4) ou une température ambiante de la seconde unité de désulfuration (4),

le module de commande (13) étant configuré pour régler le débit mesuré par le détecteur de débit (3) sur un débit prédéfini sur la base de la température détectée par le détecteur de température de désulfuration (18), ce qui permet de commander le fonctionnement de l'un au moins du dispositif de fourniture de gaz matière première (5) et du dispositif de fourniture d'air de combustion (12).

2.  Générateur d'hydrogène (14) comprenant :

    un dispositif de fourniture de gaz matière première (5) qui est conçu pour fournir un gaz matière première contenant un composé soufré ;

    une première unité de désulfuration (2) qui comporte au moins un désulfureur relié à l'amont du dispositif de fourniture de gaz matière première (5), l'au moins un désulfureur dans la première unité de désulfuration (2) étant rempli d'un agent désulfurant chargé d'éliminer au moins une partie du composé soufré présent dans le gaz matière première provenant du dispositif de fourniture de gaz matière première (5) ;

    une seconde unité de désulfuration (2) qui est composée d'au moins un désulfureur relié à l'aval de la première unité de désulfuration (2), au moins un désulfureur dans la seconde unité de désulfuration (4) étant rempli d'un agent désulfurant chargé d'éliminer au moins une partie du composé soufré présent dans le gaz matière première ;

    une unité de reformage (6) qui est conçue pour générer un gaz contenant de l'hydrogène par une réaction de reformage entre un gaz matière première résultant et de l'eau, le gaz matière première résultant étant le gaz matière première dont tout le composé soufré a été éliminé par la première unité de désulfuration (2) et la seconde unité de désulfuration (4) ;

    un détecteur de débit (3) qui est disposé entre la première unité de désulfuration (2) et la seconde unité de désulfuration (4) et conçu pour mesurer un débit du gaz matière première s'écoulant hors de la première unité de désulfuration (2) ;

une unité de fourniture d'eau (7) qui est configurée pour fournir l'eau à l'unité de reformage (6) ;

un brûleur (10) qui est conçu pour chauffer l'unité de reformage (6) en brûlant au moins l'un du gaz matière première résultant et du gaz contenant de l'hydrogène ;

un dispositif de fourniture d'air de combustion (12) qui est conçu pour fournir de l'air de combustion au brûleur (10) ; et

un module de commande (13) configuré pour commander le fonctionnement de l'un au moins du dispositif de fourniture de gaz matière première (5) et du dispositif de fourniture d'air de combustion (12) sur la base du débit mesuré par le détecteur de débit (3),

le module de commande (13) étant configuré pour régler le débit mesuré par le détecteur de débit (3) sur un débit prédéfini sur la base d'une somme des débits mesurés par le détecteur de débit (3), après que la seconde unité de désulfuration (4) a été montée dans le générateur d'hydrogène ou après que le générateur d'hydrogène a été démarré.

3.  Générateur d'hydrogène (14) selon la revendication 1 ou 2, dans lequel la seconde unité de désulfuration (4) est située à une position relativement plus près de l'unité de reformage (6) que celle où se trouve la première unité de désulfuration (2).

4.  Générateur d'hydrogène (14) selon la revendication 1 ou 2, dans lequel la première unité de désulfuration (2) et la seconde unité de désulfuration (4) sont différentes l'une de l'autre en termes de caractéristiques d'adsorption pour des composants hydrocarbures présents dans le gaz matière première.

5.  Système de pile à combustible (100) comprenant :

    le générateur d'hydrogène (14) selon l'une quelconque des revendications 1 à 4 ; et

    une pile à combustible (17) qui est conçue pour générer de l'électricité en utilisant un gaz comburant et le gaz contenant de l'hydrogène généré par le générateur d'hydrogène (14).

FIG. 1

FIG. 2

| INTEGRATED FLOW RATE OF RAW MATERIAL GAS | L NL/min | $L_1$ | $L_2$ | $L_3$ | $\cdots$ | $L_X$ | $\cdots$ |
|---|---|---|---|---|---|---|---|
| DOWNSTREAM FLOW RATE OF FIRST DESULFURIZATION SECTION | F NL/min | $F_1$ | $F_2$ | $F_3$ | $\cdots$ | $F_X$ | $\cdots$ |
| AMOUNT OF ADSORPTION ON SECOND DESULFURIZER | A NL/min | $A_1$ | $A_2$ | $A_3$ | $\cdots$ | $A_X$ | $\cdots$ |
| DOWNSTREAM FLOW RATE OF SECOND DESULFURIZATION SECTION | S NL/min | $S_1$ | $S_2$ | $S_3$ | $\cdots$ | $S_X$ | $\cdots$ |
| TARGET FLOW RATE OF RAW MATERIAL GAS | R NL/min | $R_1$ | $R_2$ | $R_3$ | $\cdots$ | $R_X$ | $\cdots$ |

FIG. 3

FIG. 4

DETECTION TEMPERATURE OF DESULFURIZATION
TEMPERATURE DETECTOR 18 ℃

RAW MATERIAL GAS FLOW RATE AFTER
SECOND DESULFURIZATION SECTION NL/min

ELAPSED TIME FROM START COMMAND min

TARGET VALUE OF FLOW RATE
OF RAW MATERIAL GAS

MEASURED VALUE OF FLOW
RATE OF RAW MATERIAL GAS

DESULFURIZATION TEMPERATURE

FIG. 5

DETECTION TEMPERATURE OF DESULFURIZATION TEMPERATURE DETECTOR 18 °C

RAW MATERIAL GAS FLOW RATE AFTER SECOND DESULFURIZATION SECTION NL/min

DESULFURIZATION TEMPERATURE

MEASURED VALUE OF FLOW RATE OF RAW MATERIAL GAS

TARGET VALUE OF FLOW RATE OF RAW MATERIAL GAS

ELAPSED TIME FROM STOP COMMAND min

EP 3 885 313 B1

FIG. 6

| | | | | | | |
|---|---|---|---|---|---|---|
| VARIATION IN DESORPTION TEMPERATURE | $\delta T_1$ °C | $\delta T_{11}$ | $\delta T_{12}$ | $\delta T_{13}$ | $\cdots$ | $\delta T_{1X}$ | $\cdots$ |
| AMOUNT OF DESORPTION FROM SECOND DESULFURIZATION SECTION | B NL/min | $B_1$ | $B_2$ | $B_3$ | $\cdots$ | $B_X$ | $\cdots$ |
| DOWNSTREAM FLOW RATE OF SECOND DESULFURIZATION SECTION | $S_1$ NL/min | $S_{11}$ | $S_{12}$ | $S_{13}$ | $\cdots$ | $S_{1X}$ | $\cdots$ |
| DETECTED VALUE OF FLOW RATE DETECTOR | F NL/min | $F_1$ | $F_2$ | $F_3$ | $\cdots$ | $F_X$ | $\cdots$ |
| TARGET FLOW RATE OF RAW MATERIAL GAS | $R_1$ NL/min | $R_{11}$ | $R_{12}$ | $R_{13}$ | $\cdots$ | $R_{1X}$ | $\cdots$ |

FIG. 7

| VARIATION IN DESORPTION TEMPERATURE | $\delta T_2$ °C | $\delta T_{21}$ | $\delta T_{22}$ | $\delta T_{23}$ | · · · | $\delta T_{2X}$ | · · · |
|---|---|---|---|---|---|---|---|
| AMOUNT OF ADSORPTION ON SECOND DESULFURIZATION SECTION | C NL/min | $C_1$ | $C_2$ | $C_3$ | · · · | $C_X$ | · · · |
| DOWNSTREAM FLOW RATE OF SECOND DESULFURIZATION SECTION | $S_2$ NL/min | $S_{21}$ | $S_{22}$ | $S_{23}$ | · · · | $S_{2X}$ | · · · |
| DETECTED VALUE OF FLOW RATE DETECTOR | F NL/min | $F_1$ | $F_2$ | $F_3$ | · · · | $F_X$ | · · · |
| TARGET FLOW RATE OF RAW MATERIAL GAS | $R_2$ NL/min | $R_{21}$ | $R_{22}$ | $R_{23}$ | · · · | $R_{2X}$ | · · · |

EP 3 885 313 B1

FIG. 8

$$F_1=F_a+F_2$$

FIG. 9

**EP 3 885 313 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2767506 A1
- JP 2006260874 A

- JP 9320622 A